# EUROPEAN PATENT SPECIFICATION

(11) **EP 0 734 361 B1**
(45) Date of publication and mention of the grant of the patent: **19.09.2001**
(21) Application number: 95903466.1
(22) Date of filing: 07.12.1994
(51) Int. Cl.: C04B 28/02, C04B 18/14

(54) **CEMENT-BASED INJECTION GROUT**
INJEKTIONSSCHLAMM AUF ZEMENTBASIS
MORTIER D'INJECTION A BASE DE CIMENT

(30) Priority: 07.12.1993 NO 934443
(43) Date of publication of application: 02.10.1996
(73) Proprietor: Elkem ASA, 0377 Oslo (NO)
(72) Inventor: DINGSOYR, Eldar, O., N-4640 Sogne (NO); FIDJESTOL, Per, N-4640 Sogne (NO); JORGENSEN, Oddny, N-4770 Hovag (NO)
(74) Representative: Rees, David Christopher
(86) International application number: NO9400197
(87) International publication number: WO9515931

(56) References cited:
- EP-A- 0 412 913
- EP-A- 0 497 691
- EP-A- 0 572 261

## Description

### Technical Field:

The present invention relates to a cement-based injection grout for consolidation and/or water proofing fine granular soils, finally fissured soils and cracks in rocks or concrete structures.

### Background Art:

The known cement-based grouts used for consolidating the above structures consist of so-called microcement, water and surface active agents. Microcement is a Portland cement which is milled and/or classified to obtain a cement where a substantial part of the cement particles have a size of less than 10 microns and where all the particles have size below 50 microns. For cement-based injection grouts it is, in order to obtain a good penetration, important that the grout has a low viscosity. Thus, it is an advantage that such cement-based grouts have a water to cement ratio as high as possible. For cement-based grouts consisting of microcement, water and optionally surface-active agents, the highest possible water to cement ratio is about 3. At a higher water content water separation will occur.

US patent No. 5,151,126 relates to a cement-based injection grout of the above-mentioned kind, consisting of fine Portland cement where as much as possible of particles above 30 microns have been removed and where a water-reducing agent is added to the cement and where the weight ratio between water and cement does not exceed 0.6. It is further stated that the injection grout may contain a fine binding product such as pozzolanes, finely ground slags, silica gel or thermal silica in a proportion of 0.5 to 10 % by weight of the total of the dry product. It is, however, not disclosed or indicated in US patent No. 5,151,126 that addition of a fine binding agent makes it possible to use a higher weight ratio between water and cement. At the low water to cement ratio mentioned in US patent No. 5,151,126 the penetration depth in soils having fine cracks, will he very limited.

In addition to grouts consisting of microcement and water, it is known to use injection grout consisting of slaked lime, microsilica and water for consolidation of fine granular soils. Such grouts are disclosed in Norwegian patents No. 168765 and 164988 and in Swedish patent publication No. 452455. The grouts based on slaked lime and microsilica do, however, suffer from the disadvantage that they have long thickening and setting time and curing accelerators therefore have to be added in order to obtain an acceptable settling time. Addition of curing accelerators as disclosed in Norwegian patent No. 168765, do, however, provide for a more complicated and costly injection grout, and in addition, the high amount of curing accelerator may reduce the penetration depth of the grouts.

EP-A-497691 discloses an injection product containing an ultra fine cement and fine particles selected from chalk, kaolin, silica and talc, where chalk is preferred.

EP-A-572261 discloses an ultra fine cement composition of particle size most preferably below 11 microns, high water/cement weight ratio and which further contains a set retarder, a dispersant and also further additives such as silica fume to reduce the density of the composition.

### Disclosure of Invention:

It is an object of the present invention to provide a microcement-based injection grout having a high water to cement ratio, low water separation and high penetration.

Accordingly, the present invention relates to an injection grout comprising microcement, water, silica particles in an amount of 5-70% based on the weight of cement and 0-10% water-reducing agents based on the weight of the cement,
characterised in that the silica is amorphous microsilica in which the particles are greater than 0.1µm in diameter and at least 90% of the particles are less than 10µm

In diameter and the grout has a weight ratio between water and cement + amorphous microsilica of between 2 and 8.

According to a preferred embodiment the grout contains 10-60% by weight and preferably 15-40% by weight of amorphous microsilica particles based on the weigh of cement.

As amorphous microsilica particles it is preferred to use amorphous silica fume recovered from off-gases from electrical smelting furnaces producing at least 75% ferrosilicon, but fume from furnaces producing 50% ferrosilicon and fume from electrical furnaces for production of CaSi can also be used as amorphous microsilica particles in the grout according to the present invention.

It is possible to obtain silica fume as a main product from the above-mentioned furnaces by adjusting the operating parameters for the furnaces. Amorphous microsilica can also be produced synthetically without reduction and oxidation.

The fine amorphous microsilica particles may contain 60 - 100 % by weight of SiO2, and have a density between 2.00 and 2.40 g/cm³ and a specific surface area of about 10m²/g.

Variations in these parameters are possible. The amorphous microsilica particles may for example have a lower SiO₂ content and the particle size distribution can be adjusted for example by removing coarse particles or by milling the silica particles. For best results it is preferred that 98 % of the amorphous microsilica particles have a particle size below 10 microns.

The weight ratio between water and cement + amorphous microsilica in the injection grout is preferably between 3 and 6.

The injection grout according to the present invention preferably contains a water-reducing agent in an amount between 1 and 10 % by weight based on the weight of cement. Conventional water-reducing agents for use in connection with cement and concrete may be used, such as for example sulphonated melamine derivates, sulphonated naphtalene derivats, sulphonated lignine derivates, carbohydrate derivates and polyacrylates.

The cement-based injecting grout according to the present invention may further contain curing accelerators and optionally thickening additives like bentonite.

It has surprisingly been found that even at such a high ratio between water and cement + amorphous microsilica as 5 the water separation for the injection grout according to the present invention is very small, which gives a good penetration on injection. The cured grout has shown to give good waterproofing and an acceptable strength.

### Detailed description of preferred embodiements:

### EXAMPLE 1

Injection grouts consisting of microcement and varying content of microsilica and having a varying water to cement + microsilica ratio were produced. For comparison purposes it was also produced injection grouts of microcement without addition of amorphous silica particles.

An ultrafine cement produced by Cementa AB, Sweden was used in the tests. The cement had such a particle size that 95 % of the particles were less than 16 microns. As amorphous silica it was used microsilica produced by Elkem a/s, Norway. The microsilica had such a particle size that at least 90 % of the particles were less than 10 microns. The microsilica was added as an aqueous slurry containing 50 % by weight of microsilica.

The composition of the injection grouts are shown in Table I. In Table I injection grouts Nos. 2, 3, 5, 6, 8, 9, 11 and 12 are according to the present invention while the injection grouts No. 1, 4, 7 and 10 are grouts which do not contain amorphous silica particles and are shown for comparison purposes.

The injection grouts Nos. 1 - 12 in Table I were tested as to setting time, water separation and penetration depth.

Setting time was measured by placing 200 ml injection grout in plastic container closed with a lid. The container was turned up-side down at certain time intervals. The setting time was than measured as the time from mixing the grout until no flow was observed when turning the container.

Water separation was measured by filling grout into a 250 ml graduated cylinder. Free water in ml after two hours storage of the graduated cylinder was taken as a measure for water separation.

Penetration depth was measured by injecting the grout into a tube made from plexiglass having a length of 85 cm and a diameter of 5 cm, said tube being filled with Silversand 17 delivered by Ahlseth, Sweden. Silversand 17 has such a particle size that all particles are less than 0.5 microns and 95 % are greater than 0.1 microns. The tube was placed horizontally and the injection grout was pumped into the tube at a rate of 16 liters per hour until it was impossible to pump any slurry at a pressure of 60 KPa. The penetration depth was then measured.

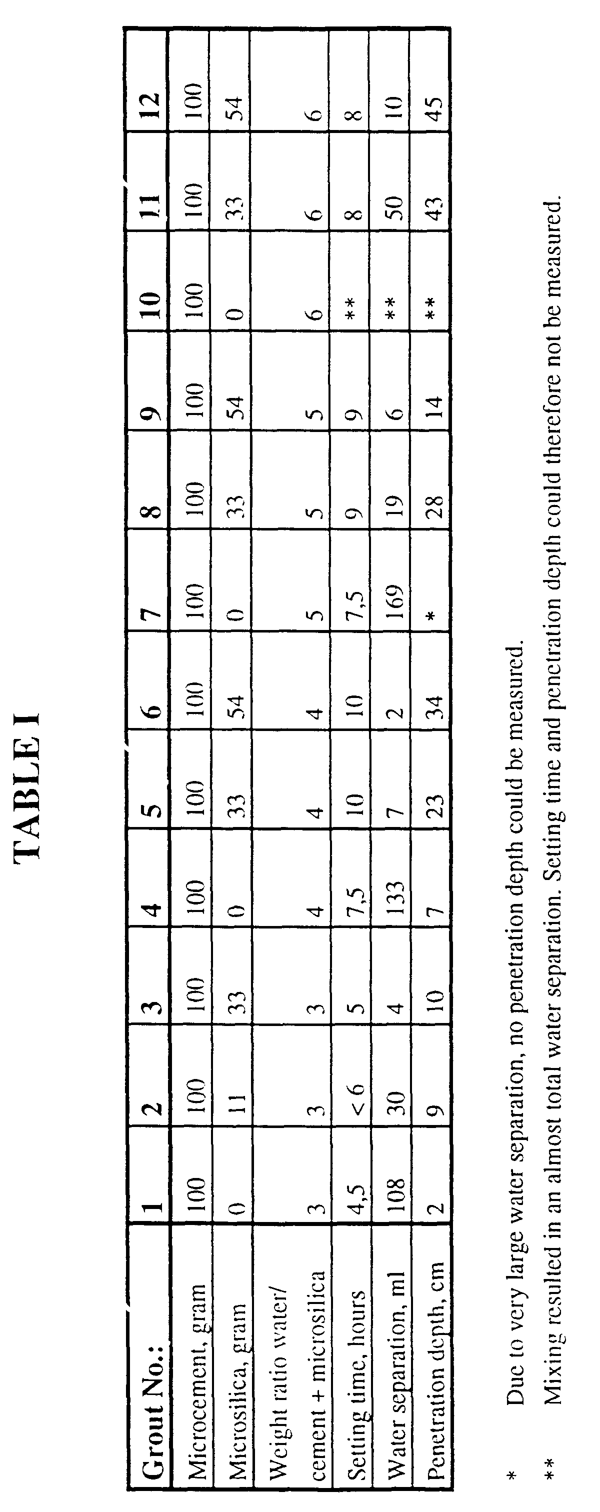

The results in Table I show that the injection grout according to the present invention has a very low water separation even at a water to cement + microsilica ratio of 6, while the grouts according to the prior art grout Nos. 1, 4, 7, 10 have unacceptably high water separation even at a water to cement ratio as low as 3 and can for this reason not he used for injection.

Table I further shows that the setting time for the grouts according to the present invention are not substantially longer than for the grouts according to the prior art, even at very high ratios between water and cement + microsilica.

### EXAMPLE 2

In order to study the effect of water reducing agent, it was produced a grout having the same composition as Grout No. 3 in Table I. To this Grout it was added 1, 3 and 5 % by weight of Peramin F based on the weight of cement. Peramin F is a water-reducing agent based on a sulphonated melamine formaldehyde derivate delivered by Perstorp AB, Sweden.

The penetration depth was measured as in Example 1. The results showed a penetration depth of 21, 33 and 49 cm for the three grouts. A substantial increase of the penetration depth was thus obtained by addition of water-reducing agents.

## Claims

1. Injection grout comprising microcement, water, silica particles in an amount of 5-70% based on the weight of cement and 0-10% water-reducing agents based on the weight of the cement, **characterised in that** the silica is amorphous microsilica in which the particles are greater than 0.1µm in diameter and at least 90% of the particles are less than 10µm in diameter and the grout has a weight ratio between water and cement + amorphous microsilica of between 2 and 8.

2. Injection grout according to Claim 1, **characterised in that** it contains 10-60% of amorphous microsilica based on the weight of cement.

3. Injection grout according to Claim 1 or 2, **characterised in that** the weight ratio between water and cement + microsilica is between 3 and 6.

4. Injection grout according to Claims 1-3, **characterised in that** it contains water-reducing agent in an amount of 1-10% by weight based on the weight of cement.

## Patentansprüche

1. Injektionsschlamm, welcher Mikrozement, Wasser, Silicateilchen in einer Menge von 5-70 %, bezogen auf das Gewicht des Zementes, und 0-10 % wasserreduzierende Mittel, bezogen auf das Gewicht des Zementes, umfaßt, **dadurch gekennzeichnet, daß** das Silica amorphes Mikrosilica ist, in dem die Teilchen einen Durchmesser von mehr als 0,1 µm besitzen und wenigstens 90 % der Teilchen einen Durchmesser von weniger als 10 µm besitzen und der Schlamm ein Gewichtsverhältnis zwischen Wasser und Zement + amorphem Mikrosilica von zwischen 2 und 8 besitzt.

2. Injektionsschlamm nach Anspruch 1, **dadurch gekennzeichnet, daß** er 10-60 % amorphes Mikrosilica, bezogen auf das Gewicht des Zementes, enthält.

3. Injektionsschlamm nach Anspruch 1 oder 2, **dadurch gekennzeichnet, daß** das Gewichtsverhältnis zwischen Wasser und Zement + Mikrosilica zwischen 3 und 6 liegt.

4. Injektionsschlamm nach den Ansprüchen 1 bis 3, **dadurch gekennzeichnet, daß** er wasserreduzierendes Mittel in einer Menge von 1-10 Gew.-%, bezogen auf das Gewicht des Zementes, enthält.

## Revendications

1. Mortier d'injection comprenant du microciment, de l'eau, des particules de silice en proportion de 5-70 % sur la base du poids de ciment, et 0-10 % d'agents de réduction d'eau sur la base du poids de ciment,
**caractérisé en ce que**
la silice est de la microsilice amorphe dans laquelle les particules ont un diamètre supérieur à 0,1 µm et dans laquelle au moins 90 % des particules ont un diamètre inférieur à 10 µm, le mortier ayant un rapport de poids entre l'eau et le ciment + la microsilice amorphe, qui est compris entre 2 et 8.

2. Mortier d'injection selon la revendication 1,
**caractérisé en ce qu'**
il contient 10-60 % de microsilice amorphe sur la base du poids de ciment.

3. Mortier d'injection selon l'une quelconque des revendications 1 ou 2,
**caractérisé en ce que**
le rapport de poids entre l'eau et le ciment + la microsilice amorphe, est compris entre 3 et 6.

4. Mortier d'injection selon l'une quelconque des revendications 1 à 3,
**caractérisé en ce qu'**
il contient un agent de réduction d'eau en proportion de 1-10% en poids sur la base du poids de ciment.
